Europäisches Patentamt

European Patent Office

Office européen des brevets

(11) Veröffentlichungsnummer: **0 282 750**

**A1**

(12) **EUROPÄISCHE PATENTANMELDUNG**

(21) Anmeldenummer: 88102339.4

(22) Anmeldetag: 18.02.88

(51) Int. Cl.⁴: **B01D 53/14** , B01D 53/00 , C02F 3/12

(30) Priorität: 10.03.87 DE 3707575

(43) Veröffentlichungstag der Anmeldung:
21.09.88 Patentblatt 88/38

(84) Benannte Vertragsstaaten:
AT BE CH DE ES FR GB GR IT LI LU NL SE

(71) Anmelder: ARASIN GMBH
Weseler Strasse 100
D-4223 Voerde-Emmelsum(DE)

(72) Erfinder: Glass, Reinhard, Dipl.-Ing.
Grünstrasse 9
D-4223 Voerde 1(DE)

(74) Vertreter: Seiler, Siegfried
DEUTSCHE SOLVAY WERKE GmbH
Langhansstrasse 6
D-5650 Solingen 11(DE)

(54) Verfahren und Vorrichtung zur Reinigung von Abluft oder Abgasen.

(57) Die vorliegende Erfindung betrifft ein Verfahren und eine Vorrichtung zur Reinigung von Abluft oder Abgasen unter Verwendung einer Waschflüssigkeit, wobei biologisch abbaubare Verunreinigungen von der Waschflüssigkeit absorbiert oder aufgenommen, transportiert und durch Mikroorganismen abgebaut werden und mindestens ein Teil der Waschflüssigkeit und/oder der in einer Reinigungsvorrichtung enthaltenden Flüssigkeit im Kreislauf geführt wird. Dabei wird die zu reinigende, mit den Abgasen oder Verunreinigungen beladene Waschflüssigkeit in einen Reaktoreilraum in ein darin enthaltenes im wesentlichen aus Wasser und/oder Waschflüssigkeit bestehendes Gemisch eingeleitet. Die eingeleitete Waschflüssigkeit und Reaktorflüssigkeit trifft unter Bildung zirkulierender Ströme oder Wirbel in den übrigen Reaktorraum über oder durchtritt diesen, wobei die Bildung der zirkulierenden Ströme oder Wirbel durch die eingeleitete zu reinigende Waschflüssigkeit, vorzugsweise durch den Waschflüssigkeitszuleitungspumpendruck, und/oder durch mindestens ein Rührwerk gesteuert oder unterstützt wird.

EP 0 282 750 A1

## Verfahren und Vorrichtung zur Reinigung von Abluft oder Abgasen

Die vorliegende Erfindung betrifft ein Verfahren und eine Vorrichtung zur Reinigung von Abluft oder Abgasen unter Verwendung einer Waschflüssigkeit, wobei biologisch abbaubare Verunreinigungen von der Waschflüssigkeit aufgenommen, transportiert und durch Mikroorganismen abgebaut werden und mindestens ein Teil der Waschflüssigkeit und/oder der in einer Reinigungsvorrichtung enthaltenen Flüssigkeit im Kreislauf geführt werden.

Aus der DE-OS 32 17 923 sind bereits ein Verfahren und Vorrichtungen zur Reinigung von Abluft bekannt, wobei biologisch abbaubare Verunreinigungen von feinverteiltem Waschwasser absorbiert, durch aerobe Mikroorganismen abgebaut und überwiegende Teile des Waschwassers im Kreislauf geführt werden. Dabei wird das Waschwasser über ein Füllkörperbett geleitet, durch das Abluft strömt, wobei die Mikroorganismen als biologischer Rasen auf der Füllkörperoberfläche angesiedelt sind.

Bei der Verwendung dieses Verfahrens und der Vorrichtung muß darauf geachtet werden, daß das an sich feste Füllkörperbett mit dem sog. biologischen Rasen an möglichst allen Stellen oder Teilen des Füllkörperbettes möglichst ständig feucht bleibt, da die Gefahr der Inaktivierung der Mikroorganismen an den trockenen Stellen besteht. Es ist weiterhin die Gefahr einer gewissen Störanfälligkeit gegeben, sobald bestimmte organisch-chemische wasserunlösliche Gase oder Flüssigkeiten in das Füllkörperbett gelangen.

Ziel und Aufgabe der vorliegenden Erfindung war es, die vorgenannten Nachteile zu vermeiden und verbesserte Verfahren und Vorrichtungen zu finden, insbesondere das Verfahren und die Vorrichtung in einem Kreislaufprozeß zu führen (und insofern umweltschonend sein) und eine große Aktivität der zum Abbau eingesetzten Mikroorganismen ermöglichen. Weiterhin sollte eine Einsparung von Frischwasssserverbrauch erreicht werden.

Erfindungsgemäß wurde festgestellt, daß diesen Zielen und Aufgaben ein Verfahren zur Reinigung von Abluft oder Abgasen unter Verwendung einer Waschflüssigkeit gerecht wird, wobei biologisch abbaubare Verunreinigungen von der Waschflüssigkeit aufgenommen, transportiert und durch Mikroorganismen abgebaut werden und mindestens ein Teil der Waschflüssigkeit und/oder der in einer Reinigungsvorrichtung enthaltenen Flüssigkeit im Kreislauf geführt wird. Die zu reinigende Waschflüssigkeit wird gemäß der Erfindung in einen Reaktorteilraum in ein darin enthaltenes im wesentlichen aus Wasser und/ oder Waschflüssigkeit bestehendes Gemisch (Reaktorflüssigkeit) eingeleitet. Die eingeleitete Waschflüssigkeit und Reaktorflüssigkeit tritt dabei unter Bildung zirkulierender Ströme oder Wirbel in den übrigen Reaktorraum über oder durchtritt diesen. Die Bildung der zirkulierenden Ströme oder Wirbel wird durch eingeleitete, zu reinigende Waschflüssigkeit, vorzugsweise durch den Waschflüssigkeitszuleitungspumpendruck und/oder mindestens ein Rührwerk unterstützt oder gesteuert.

Gemäß der Erfindung erfolgt die für die aeroben Mikroorganismen erforderliche Luft-oder Sauerstoffzuführung ganz oder zu mehr als 50 %, vorzugsweise zu mehr als 80 % (bezogen auf den erforderlichen Sauerstoff-bzw. Luftbedarf) durch die zugeleitete Waschflüssigkeit.

Die den Reaktor durchlaufende Waschflüssigkeit durchströmt während des vollständigen oder teilweisen Abbaues der biologisch abbaubaren Verunreinigungen der Waschflüssigkeit durch aerobe Mikroorganismen mindestens einen oberhalb des Bodens des Reaktors angeordneten Reaktorteilraum, vorzugsweise mindestens einen Einleitungsschacht oder eine Einleitungsröhre, bevor die gereinigte Waschflüssigkeit als Klarwasser (gereinigtes Wasser) abgegeben und/oder als Waschwasser in den Waschturm oder die Rohgasabsorptionsvorrichtung geleitet wird.

Nach einer bevorzugten Ausführungsform wird das Klarwasser (gereinigtes Wasser) vor der Weiterleitung in den Waschturm oder in die Rohgasabsorption über mindestens ein Absetz-oder Klärbecken, vorzugsweise mindestens einen Schrägklärer, geleitet. Dadurch gelingt es, evtl. mitgerissene Teilchen in dem Absetz-oder Klärbecken zurückzubehalten.

Nach einer bevorzugten Ausführungsform sind die aeroben Mikroorganismen ganz oder teilweise auf an sich bekannten Trägermaterialien mit einer hohen inneren Oberfläche, vorzugsweise Aktivkohle, keramische Körper oder Massen und/oder Schaumstoffe, mit einem mittleren Körnungs-oder Teilchendurchmesser unter 3 mm, vorzugsweise unter 2,5 mm, angeordnet, wobei vorzugsweise die während der Einleitung aufgewirbelten aeroben Mikroorganismen und/-oder das aufgewirbelte Trägermaterial durch eine schräge oder konkavähnlich gewölbte Reaktorbodenanordnung oder durch eine schräg angeordnete oder konkavähnliche Bodenplatte in den Reaktorteilraum oder Einleitungsschachtraum oder in die Nähe des Reaktorteilraumes oder des Einleitungsschachtraumes zurückgeführt wird. Sie werden (zumindest ein Teil derselben) erneut aufgewirbelt, durch den Reaktorteilraum geführt, unter erneuter Bildung zirkulierender Ströme.

Nach einer bevorzugten Ausführungsform wird die Flüssigkeit im Reaktorraum (Reaktorflüssigkeit) auf einen pH-Wert von 4,5 bis 9, vorzugsweise, 6,5 bis 8,5, und eine Temperatur von 10 bis 50 °C, vorzugsweise 17 bis 30 °C, eingestellt.

Weiterhin erfolgt nach einer bevorzugten Ausführungsform die Zufuhr von phosphorhaltigen Verbindungen (z.B. Phosphaten), Stickstoffverbindungen und anderen bzw. ähnlichen Nährstoffen für die aeroben Mikroorganismen in einem derartigen Umfang, daß das Nährstoffverhältnis ($BSB_5$) bezogen auf 100 mg/l 100 : 5 : 1 bis 100 : 10 : 1 beträgt und/oder der in der Reaktorflüssigkeit vorhandene gelöste Sauerstoff auf einen Gehalt von 1,0 bis 2,0 mg/l, vorzugsweise 1,3 bis 1,95 mg/l, eingestellt wird.

Bevorzugt wird dabei die Waschflüssigkeit von unten oder am Boden des Reaktors so eingeleitet, daß sie in und unterhalb des Reaktorteilraumes, vorzugsweise in und unterhalb des Einleitungsschachtes oder der Einleitungsröhre, eintritt und diese im wesentlichen in Richtung zur Reaktorflüssigkeitsoberfläche nach oben durchströmt. Nach einer vorzugsweisen Ausführungsform ist bzw. sind der Einleitungsschacht bzw. die Einleitungsschächte oder die Einleitungsröhre oder -röhren in einem Abstand von den Seitenwänden, möglichst annähernd in der Nähe einer Mittellinie oder annähernd zentral angeordnet. Nach einer anderen Ausführungsform wird die Waschflüssigkeit vor und/oder nach der Einleitung in den Reaktor- oder Reaktorteilraum mit einem chemischen Wasserbehandlungsmittel, vorzugsweise Flockungsmittel und/oder Polyelektrolyt, behandelt und von gebildeten Ausfällungen oder Schlämmen abgetrennt.

Die Erfindung betrifft weiterhin eine Vorrichtung zum Reinigen von Abluft oder Abgasen, bestehend aus einem Waschturm zur Behandlung der Abluft oder der Abgase mit einer Waschflüssigkeit, mindestens einer Rohr-oder Schlauchleitung, die unmittelbar oder unter Einschaltung von weiteren Reinigungsvorrichtungen zu einer Mikroorganismen enthaltenden Reinigungsvorrichtung wird, die dort durch eine weitere Rohr-oder Schlauchleitung mit dem Waschturm in Verbindung steht. Die Mikroorganismen enthaltende Reinigungsvorrichtung (Reaktor) ist durch mindestens eine Trennwand, vorzugsweise durch einen Trennschacht oder eine Trennröhre, in einen Einleitungsschachtraum und den übrigen Reaktorraum getrennt. Die untere Kante der Trennwand ist mehr als 7 cm, vorzugsweise mehr als 20 cm (gemessen in senkrechter Richtung), vom Reaktorboden entfernt, die Einleitungsstelle für die zu reinigende Waschflüssigkeit in der Nähe des Einleitungsschachtraumes, vorzugsweise unterhalb des Einleitungsschachtraumes und die Wasseraustrittsstelle im oberen Teil des Reaktorraumes angeordnet.

Nach einer Ausführungsform weist der Trennschacht oder die Trennröhre Unterbrechungen, Schlitze, Löcher und/oder Ausnehmungen auf.

Nach einer bevorzugten Ausführungsform ist in dem Reaktorteilraum, vorzugsweise in dem Einleitungsschachtraum oder in der Einleitungsröhre, mindestens ein Rührwerk angeordnet.

Nach einer anderen Ausführungsform besteht der Trennschacht oder die Trennröhre aus mehreren übereinander oder konzentrisch oder nahezu konzentrisch ineinander angeordneten Trennschächten oder Trennröhren.

Der Trennschacht kann auch trichterförmig ausgebildet sein und in der Nähe der Eintrittsstelle für die Waschflüssigkeit einen kleineren oder größeren Durchmesser (bezogen auf den oberen Durchmesser) aufweisen, jedoch sollten die Abweichungen im Durchmesser gering sein. Vorzugsweise weist der Trennschacht oder die Trennröhre sowohl an der Eintrittsstelle für die Waschflüssigkeit, als auch an der Austrittsstelle den gleichen Durchmesser oder annähernd den gleichen Durchmesser auf. Nach einer bevorzugten Ausführungsform ist die Wassereintrittsstelle als Überlaufvorrichtung oder Überlaufrinne ausgebildet.

Weiterhin ist nach einer bevorzugten Ausführungsform der Reaktorboden schräg oder konkavähnlich ausgebildet und/oder enthält mindestens eine schräg oder konkavähnlich angeordnete Bodenplatte.

Der Reaktorteilraum, vorzugsweise der Einleitungsschacht oder die Einleitungsröhre, ist oberhalb der tiefsten Stelle des Reaktorbodens in einem Abstand von mehr als 7 cm, vorzugsweise mehr als 20 cm, (gemessen in senkrechter Richtung vom Reaktorboden), angeordnet.

Nach einer Ausführungsform ist unterhalb des Einleitungsschachtraumes mindestens eine Öffnung oder mindestens eine Verteilungs-oder Abgabevorrichtung für zusätzlich einzubringende Luft und/oder für einzubringenden Sauerstoff angeordnet.

Diese Vorrichtung dient jedoch nur als Hilfsvorrichtung für den Fall, daß der Waschwasserkreislauf einige Zeit unterbrochen werden muß und/oder für den Fall, daß im Waschturm nicht genügend Luft oder Sauerstoff von dem im Kreislauf geführten Waschwasser aufgenommen werden kann.

Nach einer bevorzugten Ausführungsform ist der Waschturm mit mindestens einem weiteren Behälter verbunden oder versehen oder vorzugsweise im unteren Teil des Waschturmes mit einer Waschflüssig keitsvorlage (als Teilraum des Waschturmes) versehen. In diese Behälterteilräume oder Behälter wird die im Gegenstrom zum Gas geleitete Waschflüssigkeit gesammelt, bevor die mit den Abgasen oder Verunreinigungen beladene Waschflüssigkeit erneut in den Waschturm und/oder in den Reaktor oder Reaktorteilraum gelangt.

Auf den suspendierten Kontaktkörpern bildet sich rasch biologischer Bewuchs in einer für das zu reinigende Abwasser optimalen mikrobiellen Zusammensetzung. Die Biomasse bewirkt in Verbindung mit optimaler Belüftung und Kontaktmöglichkeit raschen aeroben Abbau der Abwasserinhaltsstoffe. Dieser Reaktor mit zirkulierender Wirbelschicht wird kontinuierlich mit Abwasser von unten beschickt. Das gereinigte Abwasser verläßt den Reakor vermittels Tauchwand und Überfallkante. Als reaktionsbeschleunigende Kontaktmaterialien dienen oberflächenreiche Granulate auf Basis Kunststoff. Aktivkohle oder Blähton (Durchmesser 1 - 3 mm). Diese verbleiben immer im Reaktor und verbrauchen sich praktisch nicht, da das Reaktionsgeschehen nicht durch die Adsorptionskapazität, sondern durch die sich ständig regenerierenden, sauerstoffaktivierten Oberflächen in Verbindung mit der darauf fixierten Biomasse und deren Biokatalysatoren bestimmt wird. Die Sauerstoff-oder Luftzufuhr erfolgt dabei vom Waschturm aus mit dem Waschwasser.

Die im Abwasser enthaltenen Schadstoffe werden im Gegenstromwäscher mit Wasser ausgewaschen. Die Flüssigkeitsmenge richtet sich unter anderen nach der Löslichkeit und dem Partialdruck der einzelnen Schadstoffkomponenten in der Abluft.

Ein Teilstrom des Kreislaufwassers wird kontinuierlich abgezogen und biologisch behandelt. Sand-und Feststoffpartikel können in einem Schrägklärer abgeschieden werden, danach erfolgt die trägerbiologische Oxidation im Wirbelbettreaktor.

Das so behandelte Wasser wird direkt in den Wäscher zurückgeführt und erneut mit Schadstoffen beladen. Da die Reaktionen im Wirbelkbettreaktor sehr rasch verlaufen entsteht sehr wenig Biomasse, die wiederum von anderen Bakterien zu $CO_2$ und $H_2O$ veratmet wird. Die anfallende zu entsorgende Schlammmenge ist deshalb sehr gering.

Nach einer bevorzugten Ausführungsform wird mindestens eine von der Reinigungsvorrichtung (Reaktor) abführende Leitung für das Klarwasser (gereinigtes Wasser) über bzw. durch mindestens ein Absetzbecken oder Klärbecken, vorzugsweise über einen Schrägklärer, geführt oder steht mit diesem in Verbindung. Dieses Absetzbecken oder Klärbecken, vorzugsweise der Schrägklärer, gehen ihrerseits weiterführend mit einer anderen Reaktions-, Reinigungs-und/oder Vorratsvorrichtung, vorzugsweise mit dem Waschturm in Verbindung und leiten das gereinigte Wasser, vorzugsweise zu dem Absorber, Waschturm oder Gegenstromwäscher.

Zeichnungsbeschreibung

Figur 1

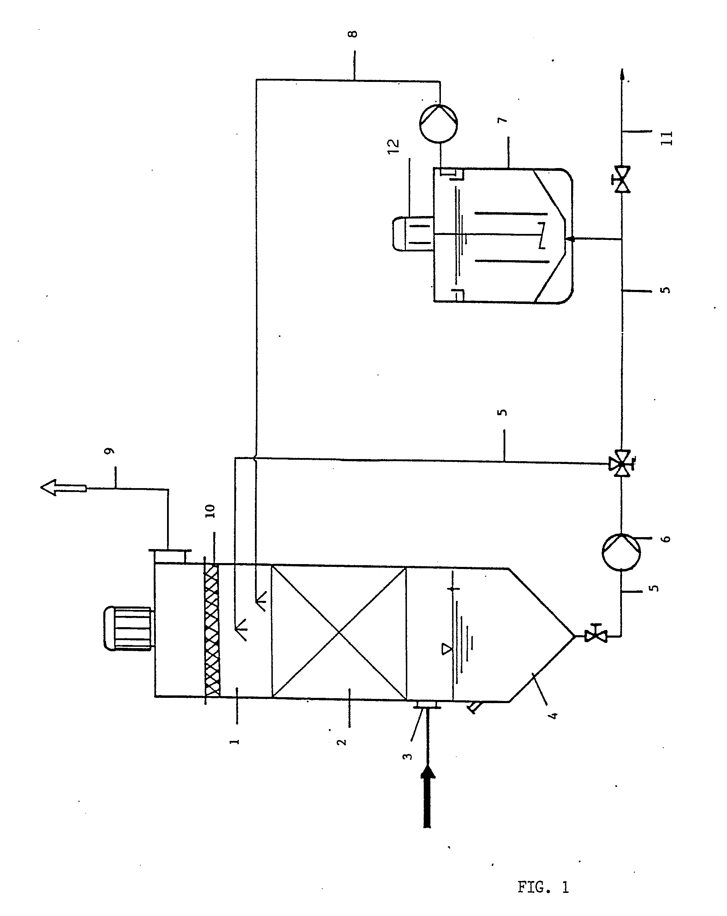

In der beigefügten Figur ist ein Ausführungsbeispiel gemäß der Erfindung - schematisch dargestellt.

Im Absorber 1 (Waschturm, Gegenstromwäscher) wird zur Minderung von Schadstoffen das Gas im Gegenstrom zum Waschmedium durch den Absorber geführt. Dabei gelangt das bei 3 eintretende Gas in die geordnete Füllkörperzone 2, in der ein intensiver Stoffaustausch zwischen dem Waschmedium und dem Gas stattfindet. Der Stoffaustausch beruht auf einer physikalischen Absorption. Bevor die gereinigte Abluft den Absorber verläßt und in die Atmosphäre gelangt, wird sie von mitgerissenen Flüssigkeitströpfchen in einer integrierten Tropfenabscheiderzone 10 befreit.

Das Waschmedium wird entgegen der Gasströmungsrichtung über eine spezielle Verteilerebene unterhalb der Tropfenabscheiderzone in den Absorber eingebracht. Nachdem die Flüssigkeit zum intensiven Stoffaustausch die geordnete Füllkörperzone passiert hat, gelangt sie mit den Schadstoffen beladen in das Wäscherunterteil, das als Flüssigkeitsvorlage 4 dient.

Über die Leitung 5 wird das Waschmedium im Kreislauf geführt, wobei ein Teilstrom mittels Pumpe 6 in den Hydroliftreaktor 7 gefördert wird. Die in den Reaktor einströmende Waschflüssigkeit erzeugt eine Strömung, welche durch entsprehende Einbauten geführt wird (Einleitungsschacht).

Im Reaktor 7 befinden sich aerobe Mikroorganismen, welche entweder frei in der Waschflüssigkeit vorliegen oder auf geeignetem Trägermaterial (z.B. Aktivkohle, keramische Körper und dgl.) mit einer hohen inneren Oberfläche immobilisiert sind. Nach dem vollständigen oder teilweisen Abbau der biologisch abbaubaren Verunreinigungen der Waschflüssigkeit durch aerobe Mikroorganismen durchströmt bzw. unterströmt das Klarwasser (gereinigtes Wasser) eine Tauchwand bevor es über eine Pumpe über Leitung 8 zurück unmittelbar in den Wäscher fließt oder über ein Absatzbecken oder Klärbecken, vorzugsweise Schrägklärer in den Wäscher geleitet wird.

Ein evtl. anfallender Schlamm wird über die Leitung 11 abgezogen und entsorgt.

Durch das Rührwerk 12 wird die Bildung der zirkulierenden Ströme oder Wirbel gesteuert oder unterstützt.

## Ansprüche

1. Verfahren zur Reinigung von Abluft oder Abgasen unter Verwendung einer Waschflüssigkeit, wobei biologisch abbaubare Verunreinigungen von der Waschflüssigkeit absorbiert oder aufgenommen, transportiert und durch Mikroorganismen abgebaut werden und mindestens ein Teil der Waschflüssigkeit und/oder der in einer Reinigungsvorrichtung enthaltenden Flüssigkeit im Kreislauf geführt wird, dadurch gekennzeichnet, daß die zu reinigende, mit den Abgasen oder Verunreinigungen beladene Waschflüssigkeit in einen Reaktorteilraum in ein darin enthaltenes im wesentlichen aus Wasser und/oder Waschflüssigkeit bestehendes Gemisch eingeleitet wird, daß die eingeleitete Waschflüssigkeit und Reaktorflüssigkeit unter Bildung zirkulierender Ströme oder Wirbel in den übrigen Reaktorraum übertritt oder durchtritt und die Bildung der zirkulierenden Ströme oder Wirbel durch die eingeleitete zu reinigende Waschflüssigkeit, vorzugsweise durch den Waschflüssigkeitszuleitungspumpendruck, und/oder durch mindestens ein Rührwerk gesteuert oder unterstützt wird.

2. Verfahren nach Anspruch 1, dadurch gekennzeichnet, daß die für die aeroben Mikroorganismen erforderliche Luft-oder Sauerstoffzuführung ·ganz oder

    zu mehr als 50 %, vorzugsweise

    zu mehr als 80 %,

(bezogen auf den erforderlichen Sauerstoff-bzw. Luftbedarf) durch die zugeleitete Waschflüssigkeit erfolgt.

3. Verfahren nach Ansprüchen 1 und 2, dadurch gekennzeichnet, daß die den Reaktor durchlaufende Waschflüssigkeit während des vollständigen oder teilweisen Abbaues der biologisch abbaubaren Verunreinigungen der Waschflüssigkeit durch aerobe Mikroorganismen mindestens einen oberhalb des Bodens des Reaktors angeordneten Reaktorteilraum, vorzugsweise mindestens einen Einleitungsschacht oder eine Einleitungsröhre, durchströmt, bevor die gereinigte Waschflüssigkeit als Klarwasser (gereinigtes Wasser) abgegeben und/oder als Waschwasser in den Waschturm oder die Rohgasabsorptionsvorrichtung geleitet wird.

4. Verfahren nach einem oder mehreren der Ansprüche 1 bis 3, dadurch gekennzeichnet, daß das Klarwasser (gereinigtes Wasser) vor der Weiterleitung in den Waschturm oder die Rohgasabsorption über mindestens ein Absetz-oder Klärbecken, vorzugsweise mindestens einen Schrägklärer, geleitet wird.

5. Verfahren nach einem oder mehreren der Ansprüchen 1 bis 4, dadurch gekennzeichnet, daß die aeroben Mikroorganismen ganz oder teilweise auf an sich bekannten Trägermaterialien mit einer hohen inneren Oberfläche, vorzugsweise Aktivkohle, keramische Körper oder Massen und/oder Schaumstoffe, mit einem mittleren Körnungs-oder Teilchendurchmesser

    unter 3 mm, vorzugsweise

    unter 2,5 mm,

angeordnet sind, wobei vorzugsweise die während der Einleitung aufgewirbelten aeroben Mikroorganismen und/oder das aufgewirbelte Trägermaterial durch eine schräge oder konkavähnlich gewölbte Reaktorbodenanordnung oder durch eine schräg angeordnete oder konkavähnliche Bodenplatte in den Reaktorteilraum oder Einleitungsschachtraum oder in die Nähe des Reaktorteilraumes oder des Einleitungsschachtraumes zurückgeführt wird.

6. Verfahren nach einem oder mehreren der Ansprüche 1 bis 5, dadurch gekennzeichnet, daß die Flüssigkeit im Reaktorraum (Reaktorflüssigkeit) auf einen pH-Wert von

    4,5 bis 9 , vorzugsweise

    6,5 bis 8,5,

und eine Temperatur von

    10 bis 50 °C, vorzugsweise

    17 bis 30 °C,

eingestellt wird.

7. Verfahren nach einem oder mehreren der Ansprüche 1 bis 6, dadurch gekennzeichnet, daß das Nährstoffverhältnis ($BSB_5$) bezogen auf 100 mg/l

    100 : 5 : 1 bis 100 : 10 : 1

beträgt und/oder der in der Reaktorflüssigkeit vorhandene gelöste Sauerstoff auf einen Gehalt von 1,0 bis 2,0 mg/l, vorzugsweise

    1,3 bis 1,95 mg/l,

eingestellt wird.

8. Verfahren nach einem oder mehreren der Ansprüche 1 bis 7, dadurch gekennzeichnet, daß die Waschflüssigkeit von unten oder am Boden des Reaktors so eingeleitet wird, daß sie in und unterhalb des Reaktorteilraumes, vorzugsweise in und unterhalb des Einleitungsschachtes oder der Einleitungsröhre, eintritt und diese im wesentlichen in Richtung zur Reaktorflüssigkeitsoberfläche nach oben durchströmt.

9. Verfahren nach einem oder mehreren der Ansprüche 1 bis 8, dadurch gekennzeichnet, daß die Waschflüssigkeit vor und/oder nach der Einleitung in den Reaktor-oder Reaktorteilraum mit einem chemischen Wasserbehandlungsmittel, vorzugsweise Flockungsmittel und/oder Polyelektrolyt, behandelt und von gebildeten Ausfällungen oder Schlämmen abgetrennt wird.

10. Vorrichtung zum Reinigen von Abluft oder Abgasen, bestehend aus einem Waschturm zur Behandlung der Abluft oder der Abgase mit einer Waschflüssigkeit, mindestens einer Rohr-oder Schlauchleitung, die unmittelbar oder unter Einschaltung von weiteren Reinigungsvorrichtungen zu einer Mikroorganismen enthaltenden Reinigungsvorrichtung wird, die dort durch eine weitere Rohr- oder Schlauchleitung mit dem Waschturm in Verbindung steht, dadurch gekennzeichnet, daß die Mikroorganismen enthaltende Reinigungsvorrichtung (Reaktor) durch mindestens eine Trennwand, vorzugsweise durch einen Trennschacht oder eine Trennröhre, in einen Einleitungsschachtraum und den übrigen Reaktorraum getrennt ist, daß die untere Kante der Trennwand  .

mehr als 7 cm, vorzugsweise

mehr als 20 cm

(gemessen in senkrechter Richtung), vom Reaktorboden entfernt ist, die Einleitungsstelle für die zu reinigende Waschflüssigkeit in der Nähe des Einleitungsschachtraumes, vorzugsweise unterhalb des Einleitungsschachtraumes und die Wasseraustrittsstelle im oberen Teil des Reaktorraumes angeordnet ist.

11. Vorrichtung nach Anspruch 10, dadurch gekennzeichnet, daß der Trennschacht oder die Trennröhre Unterbrechungen, Schlitze, Löcher und/oder Ausnehmungen aufweist.

12. Vorrichtung nach Ansprüchen 10 und 11, dadurch gekennzeichnet, daß in dem Reaktorteilraum, vorzugsweise in dem Einleitungsschachtraum oder in der Einleitungsröhre, mindestens ein Rührwerk angeordnet ist.

13. Vorrichtung nach einem oder mehreren der Ansprüche 10 bis 12, dadurch gekennzeichnet, daß der Trennschacht oder die Trennröhre aus mehreren übereinander oder konzentrisch ineinander angeordneten Trennschächten oder Trennröhren besteht.

14. Vorrichtung nach einem oder mehreren der Ansprüche 10 bis 13, dadurch gekennzeichnet, daß der Trennschacht trichterförmig ausgebildet ist und in der Nähe der Eintrittsstelle für die Waschflüssigkeit einen kleineren oder größeren Durchmesser (bezogen auf den oberen Durchmesser) aufweist.

15. Vorrichtung nach einem oder mehreren der Ansprüche 10 bis 14, dadurch gekennzeichnet, daß die Wassereintrittsstelle als Überlaufvorrichtung oder Überlaufrinne ausgebildet ist.

16. Vorrichtung nach einem oder mehreren der Ansprüche 10 bis 15, dadurch gekennzeichnet, daß der Reaktorboden schräg oder konkavähnlich ausgebildet ist und/oder mindestens eine schräg oder konkavähnlich angeordnete Bodenplatte enthält.

17. Vorrichtung nach Ansprüchen 10 bis 16, dadurch gekennzeichnet, daß der Reaktorteilraum, vorzugsweise der Einleitungsschacht oder die Einleitungsröhre, oberhalb der tiefsten Stelle des Reaktorbodens in einem Abstand

von mehr als 7 cm, vorzugsweise

mehr als 20 cm,

(gemessen in senkrechter Richtung vom Reaktorboden), angeordnet ist.

18. Vorrichtung nach einem oder mehreren der Ansprüche 10 bis 17, dadurch gekennzeichnet, daß unterhalb des Einleitungsschachtraumes mindestens eine Öffnung oder mindestens eine Verteilungs-oder Abgabevorrichtung für zusätzlich einzubringende Luft und/ oder für einzubringenden Sauerstoff angeordnet ist.  ·

19. Vorrichtung nach einem oder mehreren der Ansprüche 10 bis 18, dadurch gekennzeichnet, daß mindestens eine von der Reinigungsvorrichtung (Reaktor) abführende Leitung für das Klarwasser (gereinigtes Wasser) über bzw. durch mindestens ein Absetzbecken oder Klärbecken, vorzugsweise über einen Schrägklärer, geführt wird oder mit diesem in Verbindung steht, das bzw. der weiterführend mit einer anderen Reaktions-, Reinigungs-und/oder Vorratsvorrichtung, vorzugsweise mit dem Waschturm, in Verbindung steht.

FIG. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 374 070  (DAIMLER-BENZ) * Figur; Seite 3, Zeile 21 - Seite 7, Zeile 16 * --- | 1 | B 01 D  53/14 B 01 D  53/00 C 02 F   3/12 |
| Y | DE-A-3 433 018  (LINDE AG) * Figur 1; Seite 10, Zeile 18 - Seite 12, Zeile 22 * | 1 | |
| A | * Seite 8, Zeilen 19-35 * --- | 5 | |
| A | EP-A-0 133 614  (VOEST-ALPINE) * Anspruch 3 * --- | 9 | |
| A | EP-A-0 108 730  (G. RIGHETTI) * Anspruch 3 * --- | 9 | |
| A | DE-A-2 841 011  (METALLGESELLSCHAFT) * Seite 6, Zeile 16 - Seite 8, Zeile 2 * ------ | 1,3,4, 10,12 | |

RECHERCHIERTE SACHGEBIETE (Int. Cl.4)

B 01 D
C 02 F

Der vorliegende Recherchenbericht wurde für alle Patentansprüche erstellt

| Recherchenort | Abschlußdatum der Recherche | Prüfer |
|---|---|---|
| DEN HAAG | 14-06-1988 | BOGAERTS M.L.M. |